# EUROPÄISCHE PATENTANMELDUNG

(11) **EP 4 843 923 A1**
(43) Veröffentlichungstag der Anmeldung: **25.11.2026**
(21) Anmeldenummer: 26180057.7
(22) Anmeldetag: 20.05.2026
(51) Int. Cl.: B65G 1/04

(54) **SHUTTLE-SYSTEM UND VERFAHREN ZUM BETREIBEN EINES SHUTTLE-SYSTEMS**

(30) Priorität: 21.05.2025 DE 102025119782
(71) Anmelder: Gebhardt Fördertechnik GmbH, 74889 Sinsheim (DE)
(72) Erfinder: Marco, Gebhardt, 74889 Sinsheim (DE)
(74) Vertreter: Patentanwälte und Rechtsanwalt Weiß, Arat & Partner mbB

(57) **Zusammenfassung**

Ein Shuttle-System soll ein Regalsystem (1) sowie zumindest ein Shuttle (3), und ferner horizontale und vertikale Führungs- und Halteelemente (6a, 6b) umfassen.

## Beschreibung

### Technisches Gebiet

Die Erfindung betrifft ein Shuttle-System und ein Verfahren zum Betreiben eines Shuttle-Systems gemäss den unabhängigen Ansprüchen.

### Stand der Technik

Shuttle-Systeme sind aus dem Stand der Technik bekannt. Ferner sind aus dem Stand der Technik Shuttles bekannt, die sich an geeigneten Strukturen an Regalfronten von Regalen vertikal nach oben bewegen, und somit "klettern" können. Ein kletterfähiges Fahrzeug ist beispielsweise in der WO 2019 130 298 A1 offenbart.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Patentansprüche. Vorteilhafte Ausgestaltungen sind in den abhängigen Patentansprüchen beschrieben.

Ein Shuttle-System gemäss der vorliegenden Erfindung umfasst ein Regalsystem und zumindest ein Shuttle.

Das Shuttle ist vorzugsweise ein Fahrzeug, welches sich fahrerlos und vorzugsweise autonom innerhalb des Regalsystems, insbesondere innerhalb von Gassen des Regalsystems in einer nachstehend noch näher erläuterten Weise, sowie ausserhalb des Regalsystems mittels Rädern auf dem Boden fortbewegen kann.

Das Shuttle-System umfasst vorzugsweise mehrere solcher Shuttles. Wird die Funktionsweise des Systems und das weiter unten beschriebene Verfahren im Hinblick auf ein einzelnes Shuttle beschrieben, so ist stets auch der Einsatz einer Mehrzahl von Shuttles umfasst.

Das Regalsystem umfasst eine Mehrzahl von Regalen mit dazwischen befindlichen Gassen, welche durch zwei einander zugewandte Regalfronten gebildet werden. Bei den Regalen kann es sich um Hochregale handeln, die Höhe der Regale kann also bei über 12 Metern liegen. Es kann sich um ein- oder mehrfachtiefe Regale handeln, wobei einfachtiefe Regale bevorzugt sind.

Ein nachstehend noch näher beschriebenes Ein- und Auslagern von Ladegütern in die Regale und aus den Regalen erfolgt vorzugsweise an den Regalfronten.

Pro Gasse ist jeweils eine erste der beiden diese Gasse bildenden Regalfronten mit einer Mehrzahl von Führungs- und Halteelementen einer ersten Gruppe von Führungs- und Halteelementen ausgestattet. Diese Führungs- und Halteelemente der ersten Gruppe verlaufen horizontal.

Vorzugsweise sind die vorgenannten horizontal verlaufenden Führungs- und Halteelemente der ersten Gruppe vertikal voneinander beabstandet. Vorzugsweise decken diese Führungs- und Halteelemente im Wesentlichen die gesamte Höhe der betreffenden Regalfront ab. Vorzugsweise verlaufen die vorgenannten horizontal verlaufenden Führungs- und Halteelemente parallel zueinander.

Die zweite der beiden Regalfronten ist mit einer Mehrzahl von Führungs- und Halteelementen einer zweiten Gruppe von Führungs- und Halteelementen ausgestattet. Diese Führungs- und Halteelemente der zweiten Gruppe verlaufen vertikal.

Vorzugsweise sind die vorgenannten vertikal verlaufenden Führungs- und Halteelemente der ersten Gruppe horizontal voneinander beabstandet. Vorzugsweise decken diese Führungs- und Halteelemente im Wesentlichen die gesamte Länge der betreffenden Regalfront ab. Vorzugsweise verlaufen die vorgenannten vertikal verlaufenden Führungs- und Halteelemente parallel zueinander.

Das Shuttle ist eingerichtet, eine Wirkverbindung zu zumindest einem Führungs- und Halteelement einzugehen, um an diesem zumindest einen Führungs- und Halteelement gehalten zu werden und sich entlang dieses zumindest einen Führungs- und Halteelements zu bewegen. Das Entlangbewegen kann, entsprechend der Orientierung des Führungs- und Halteelements, horizontal oder vertikal erfolgen.

Hierbei ist das Shuttle vorzugsweise eingerichtet, sich abhängig beispielsweise von einem abzuarbeitenden Auftrag, also beispielsweise zum Ein- oder Auslagern von Ladegütern und somit beispielsweise zum Anfahren eines bestimmten Lagerplatzes im Regal nacheinander sowohl an horizontal verlaufenden als auch an vertikal verlaufenden Führungs- und Halteelementen zu halten und sich entlang dieser zu bewegen. Wie nachstehend noch näher erläutert, nimmt das Shuttle zeitgleich vorzugsweise nur entweder eine Wirkverbindung zu einem oder mehreren horizontal verlaufenden oder zu einem oder mehreren vertikal verlaufenden Führungs- und Halteelementen auf. Es besteht also vorzugsweise zur selben Zeit, abgesehen von einem nachstehend noch näher beschriebenen "Umgreifen", stets nur eine Wirkverbindung zu zumindest einem Führungs- und Halteelement einer einzigen Gruppe. Vorzugsweise besteht nur während dem nachstehend näher beschriebenen "Umgreifen" zur selben Zeit eine Wirkverbindung zu Führungs- und Halteelementen beider Gruppen.

Die Wirkverbindung kann beliebiger Art, also beispielsweise form- oder kraftschlüssig sein. Hierbei kann an ein Ergreifen, ein Einhaken, ein Zusammenwirken von Zahnrad und Zahnschiene, an Gleitschienen und Schienenführungen und dergleichen mehr gedacht sein.

Das Shuttle kann eine Einrichtung zum Eingehen der Wirkverbindung zu dem Führungs- und Halteelement umfassen. Diese Wirkverbindung ermöglicht dem Shuttle, sich entlang des betreffenden Führungs- und Halteelements zu bewegen.

Vorzugsweise umfasst das Shuttle zumindest zwei Einrichtungen zum Eingehen einer Wirkverbindung. Das Vorhandensein zweier derartiger Einrichtungen erlaubt ein Wechseln der Bewegungsrichtung und das "Umgreifen". Dies wird nachstehend noch im Detail erläutert.

Das Shuttle ist eingerichtet, sich innerhalb der Gasse vertikal entlang der vertikal verlaufenden Führungs- und Halteelemente zu bewegen, ohne hierbei Kontakt zu den horizontal verlaufenden Führungs- und Halteelementen zu haben. Das Shuttle ist somit eingerichtet, vertikal zu "klettern".

Das Shuttle ist ferner eingerichtet, sich innerhalb der Gasse horizontal entlang der horizontal verlaufenden Führungs- und Halteelemente zu bewegen, ohne hierbei Kontakt zu den vertikal verlaufenden Führungs- und Halteelementen zu haben. Das Shuttle ist somit eingerichtet, in der Gasse entlang ihrer Längsrichtung auf verschiedenen Höhen zu verkehren.

Das Shuttle ist ferner eingerichtet, für einen Wechsel der Bewegungsrichtung eine Wirkverbindung zu den Führungs- und Halteelementen einer Gruppe einzugehen und eine bis dahin bestehende Wirkverbindung zu den Führungs- und Halteelementen der anderen Gruppe zu lösen. Vorzugsweise erfolgen die vorgenannten Schritte in der vorgenannten Reihenfolge.

Beispielsweise kann das Shuttle auf dem Boden sich bewegend in die Gasse einfahren, Kontakt zu einem oder mehreren vertikal verlaufenden Führungs- und Halteelementen aufnehmen, sich ein Stück weit vertikal an der Regalfront nach oben bewegen, auf einer bestimmten Höhe anhalten, "umgreifen", indem es eine Wirkverbindung zu einem oder mehreren horizontal verlaufenden Führungs- und Halteelementen an der anderen Regalfront eingeht, und den Kontakt zu dem oder den vertikal verlaufenden Halteelement/en lösen, um sich dann entlang des oder der horizontal verlaufenden Führungs- und Halteelemente/s zu seinem Ziel-Ort, bspw. einem Lagerplatz im Regal, zu bewegen. Dort kann ein Ein- oder Auslagern erfolgen.

Ein Wechsel der Bewegungsrichtung meint hierbei vorzugsweise den Wechsel von einer horizontalen Bewegung in eine vertikale Bewegung und umgekehrt.

Sämtliche Führungs- und Halteelemente sind vorzugsweise Führungs- und Halteelemente für das Shuttle. Die Führungs- und Halteelemente können in Bestandteile des Regals, beispielsweise in Steher oder Streben, integriert oder an diesen befestigt sein, oder zumindest parallel zu diesen verlaufen. Weiterhin können die Führungs- und Halteelemente auch unabhängig von Stehern, Streben oder dergleichen am Regal befestigt sein.

Es kann daran gedacht sein, dass sich das Shuttle während einer Bewegung in vertikaler Richtung an einem einzigen oder an mehreren vertikalen Führungs- und Halteelementen hält und sich entsprechend entlang einem einzigen oder entlang mehreren vertikalen Führungs- und Halteelementen bewegt. Entsprechendes gilt für die horizontale Bewegung.

Im Allgemeinen kann daran gedacht sein, dass jedes einzelne Führungs- und Halteelement ein Element ist, das die Funktionen Führen und Halten übernimmt. Alternativ kann daran gedacht sein, separate Führungselemente und separate Halteelemente einzusetzen. Im letztgenannten Fall hält das Shuttle üblicherweise zwecks Bewegung in vertikaler oder horizontaler Richtung innerhalb der Gasse jeweils gleichzeitig Kontakt zu zumindest zwei solchen Elementen, nämlich zu einem horizontalen Führungselement und einem horizontalen Halteelement. Analoges gilt für eine vertikale Bewegung mit separaten Führungselementen und Halteelementen Die Funktionen "Führen" und "Halten" werden schliesslich für die horizontale und die vertikale Bewegung benötigt. Vorzugsweise kann ein Entlangbewegen entlang nur eines einzigen Führungs- und Halteelements nur dann erfolgen, wenn das betreffende Element tatsächlich ein kombiniertes Führungs- und Halteelement ist, welches beide Funktionen übernimmt.

Es kann selbstverständlich angedacht sein, dass das Shuttle zwecks horizontaler und/oder vertikaler Bewegung mit mehreren gleichartigen Einrichtungen zum Eingehen einer Wirkverbindung eine solche Wirkverbindung zu jeweils zwei horizontalen oder vertikalen Führungs- und Halteelementen eingeht. Dies kann ein besonders sicheres Führen und/oder Halten sowie eine gewünschte Redundanz und Sicherheit bewirken.

Es kann daran gedacht sein, dass die Führungs- und Halteelemente beider Gruppen sich nicht kreuzen. Innerhalb derselben Gruppe verlaufen die Führungs- und Halteelemente somit vorzugsweise parallel zueinander. Kreuzungen zwischen Führungs- und Halteelementen verschiedener Gruppen existieren vorzugsweise nicht.

Es kann daran gedacht sein, dass pro Gasse jeweils die erste der beiden diese Gasse bildenden Regalfronten ausschliesslich mit einer Mehrzahl von horizontal verlaufenden Führungs- und Halteelementen für das Shuttle ausgestattet ist, und dass die zweite der beiden Regalfronten ausschliesslich mit einer Mehrzahl von vertikal verlaufenden Führungs- und Halteelementen für das Shuttle ausgestattet ist. Sämtliche im Regalsystem vorhandenen Gassen können derart ausgebildet sein.

Das Shuttle umfasst vorzugsweise eine Mehrzahl von Rädern, beispielsweise zumindest drei oder vier Räder, ggf. auch mehr, zum Fahren auf ebenem Grund. Beispielsweise kann das Shuttle mit Hilfe der Räder auf einem Hallenboden einer Lagerhalle fahren.

Es kann daran gedacht sein, dass die Führungs- und Halteelemente starr sind. Die Führungs- und Halteelemente, üblicherweise also sämtliche Führungs- und Halteelemente, umfassen somit keine beweglichen Teile, Abschnitte oder Elemente, wie beispielsweise Weichen oder dergleichen. Ein Richtungswechsel wird, wie bereits beschrieben, nicht über Weichen oder dergleichen, sondern durch ein Umgreifen bewerkstelligt.

Es kann daran gedacht sein, dass das Shuttle einen Antrieb und / oder einen Energiespeicher aufweist. Vorzugsweise weist das Shuttle einen Antrieb und einen Energiespeicher auf. Der Antrieb kann beispielsweise ein Elektromotor sein. Der Energiespeicher kann beispielsweise ein Akku oder ein zur Energiespeicherung vorgesehener Kondensator, teilweise "Supercap" oder "Ultracap" genannt, sein. Vorzugsweise erfolgen die Bereitstellung von Energie und die Bewegung der Shuttles also nicht durch oder über die Führungs- und Halteelemente. Letztere sind somit vorzugsweise passiv.

Die vorliegende Erfindung umfasst neben den vorbeschriebenen Varianten des Shuttle-Systems auch ein nachstehend beschriebenes Verfahren zum Betreiben eines solchen Shuttle-Systems. Merkmale und Details, die vorstehend im Hinblick auf das Shuttle-System beschrieben wurden, gelten auch für das nachstehend beschriebene Verfahren und umgekehrt.

Bei dem Verfahren zum Betreiben des Shuttle-Systems wird ein Einlagern von Ladegütern in ein Regal, ein Auslagern von Ladegütern aus einem Regal und ein Transport von Ladegütern in und aus den Gassen von dem zumindest einen Shuttle bewerkstelligt.

Ausserhalb der Gassen fahren die Shuttles vorzugsweise mittels ihrer Räder auf dem Boden, beispielsweise einem Hallenboden einer Lagerhalle, wie etwa in einer Lagervorzone.

Bei den Ladegütern kann es sich beispielsweise um verpackte oder unverpackte Ladegüter handeln. Es kommen auch Kisten, Kartons, Palletten und dergleichen in Betracht. Ladegüter im Rahmen der vorliegenden Erfindung sind beliebige, von dem Shuttle zu transportierende Gegenstände.

Das Ein- und Auslagern von Ladegütern erfolgt vorzugsweise, nachdem das Shuttle durch Fortbewegen entlang der Führungs- und Halteelemente seine Ziel-Position in Form eines Lagerplatzes in einem der Regale erreicht hat. Das Ein- und Auslagern von Ladegütern kann mit Hilfe bekannter Einrichtungen zum Ein- und Auslagern wie Lastaufnahmemitteln, Schiebern, Greifern oder dergleichen erfolgen. Derartige Einrichtungen sind aus dem Stand der Technik bekannt.

Es kann daran gedacht sein, dass mehrere Shuttles in derselben Gasse verkehren, und für eine horizontale Bewegung innerhalb dieser Gasse sowohl die erste Gruppe der horizontal verlaufenden Führungs- und Halteelemente als auch einen Boden nutzen. Es kann auch angedacht sein, dass nur die erste Gruppe der horizontal verlaufenden Führungs- und Halteelemente für die horizontale Bewegung in der Gasse genutzt werden.

Es kann daran gedacht sein, dass das Shuttle sowohl einen bodengebundenen Transport zu den Gassen hin und von den Gassen weg, beispielsweise in einer Lagervorzone, als auch den Transport innerhalb der Gassen bis hin zu den Lagerplätzen der Ladegüter übernehmen. Es kann somit daran gedacht sein, auf separate Transport- oder Fördermittel in der Lagervorzone zu verzichten.

Die Shuttles bewegen sich vorzugsweise, beispielsweise mit Hilfe eines Lagerverwaltungssystems oder gesteuert durch ein Lagerverwaltungssystem und/oder mit Hilfe von Sensoren im Shuttle, autonom innerhalb und ausserhalb der Gassen, also beispielsweise auch in der Lagervorzone. Dasselbe gilt natürlich auch für eine Mehrzahl von Shuttles. Lagerverwaltungssysteme und Sensoren, die eine autonome Bewegung von Shuttles ermöglichen, sind bekannt.

Wie bereits beschrieben, umfassen die Shuttles vorzugsweise eine Einrichtung zur Aufnahme der Wirkverbindung zu dem Führungs- und Halteelement. Diese Einrichtung ermöglicht also beispielsweise ein Ergreifen, Einhaken oder dergleichen und ein anschliessendes Entlangbewegen entlang des oder der Führungs- und Halteelemente/s.

Es kann daran gedacht sein, eine Breite der Gasse so zu wählen, dass zeitgleich jeweils nur ein einziges Shuttle entlang einer Längsrichtung der Gasse in letztere einfachen kann. Mit derart schmalen Gassen wird die Lagerdichte des Regalsystems vorteilhaft erhöht. Um Ein- und Auslagerzeiten dennoch niedrig zu halten, können die Shuttles sich entlang der Längsrichtung der Gasse auf verschiedenen Höhen entlang verschiedener, vertikal beabstandeter horizontal verlaufender Führungs- und Halteelemente horizontal bewegen. Indem sich mehrere Shuttles in derselben Gasse horizontal auf verschiedenen Höhen entlang verschiedener Führungs- und Halteelemente fortbewegen können, werden etwaige Wartezeiten vorteilhaft verkürzt, ohne dass die Gasse verbreitert werden muss.

Eine schmale Gasse, deren Breite geringer ist, als die Breite zweier nebeneinanderstehender Shuttles, ermöglicht ferner den weiter oben bereits beschriebenen Wechsel der Bewegungsrichtung durch Eingehen der Wirkverbindung zu den Führungs- und Halteelementen einer Gruppe und, vorzugsweise anschliessendes Lösen der bis dahin bestehende Wirkverbindung zu den Führungs- und Halteelementen der anderen Gruppe. Ein solches "Umgreifen" des Shuttles von einer Regalfront zur anderen ist auch im Hinblick auf die Gestaltung und Tragfähigkeit der hierfür benötigten Einrichtungen zum Eingehen der Wirkverbindungen einfacher, je schmaler die Gasse ist.

Es ist also vorzugsweise daran gedacht, dass die Breite der Gasse geringer ist, als die Breite zweier nebeneinanderstehender Shuttles, wobei die Breite der Gasse ferner zumindest der Breite eines Shuttles entspricht. Gemäss alternativen Ausführungsformen kann auch an breitere Gassen gedacht sein, sofern das Umgreifen zwecks Richtungswechsel möglich ist.

Bei einer Ausführungsvariante des Verfahrens kann angedacht sein, dass das Shuttle eine Wirkverbindung zu zumindest einem Führungs- und Halteelement eingeht, um an diesem zumindest einen Führungs- und Halteelement gehalten zu werden,
und dass sich das Shuttle entlang dieses zumindest einen Führungs- und Halteelements bewegt,
wobei sich das Shuttle innerhalb der Gasse vertikal entlang der vertikal verlaufenden Führungs- und Halteelemente bewegt, ohne hierbei Kontakt zu den horizontal verlaufenden Führungs- und Halteelementen zu haben, und wobei sich das Shuttle innerhalb der Gasse horizontal entlang der horizontal verlaufenden Führungs- und Halteelemente bewegt, ohne hierbei Kontakt zu den vertikal verlaufenden Führungs- und Halteelementen zu haben,
und wobei das Shuttle zwecks Wechsel der Bewegungsrichtung eine Wirkverbindung zu den Führungs- und Halteelementen einer Gruppe eingeht und eine bis dahin bestehende Wirkverbindung zu den Führungs- und Halteelementen der anderen Gruppe löst.

Ein Wechsel der Bewegungsrichtung meint hierbei vorzugsweise den Wechsel von der horizontalen zur vertikalen Bewegung oder umgekehrt.

Eine Ausführungsvariante des Verfahrens kann folgende Schritte umfassen:
- ein Zutrittswunsch einer Bedienperson betreffend die Gasse wird erfasst
- alle in der Gasse befindlichen Shuttles verlassen die Gasse oder wechseln in eine gegen Abstürzen gesicherte Betriebslage.

Der Zutrittswunsch kann beispielsweise durch Anmeldung, etwa per Knopfdruck oder dergleichen, bekannt gegeben, oder durch geeignete Sensoren registriert werden. Es sind zahlreiche Varianten denkbar, wie der Zutrittswunsch erfasst werden kann.

Es kann an verschiedene gegen Abstürzen gesicherte Betriebslagen gedacht sein.

Eine solche Betriebslage des Shuttles kann beispielsweise durch Herstellung einer Wirkverbindung zwischen dem Shuttle und den Führungs- und Halteelementen beider Gruppen an beiden der die Gasse bildenden Regalfronten erreicht werden. Hierbei kann ein Einrasten oder jedenfalls ein Halten an vertikal und horizontal verlaufenden Führungs- und Halteelementen zum selben Zeitpunkt erreicht werden.

Eine alternative gegen Abstürzen gesicherte Betriebslage kann vorliegen, wenn sämtliche Shuttles der Gasse, zu der ein Zutrittswunsch erfasst wurde, diese Gasse verlassen. Tritt die Bedienperson erst nach dem Verlassen der Shuttles in die betreffende Gasse ein, so besteht keinerlei Gefahr durch sich bewegende Shuttles innerhalb dieser Gasse.

Bei einer Ausführungsvariante des Verfahrens kann angedacht sein, dass sich die Shuttles entlang einer Mehrzahl der Führungs- und Halteelemente nur in einer Richtung bewegen.

Es kann also an einen Einbahnstrassen-Betrieb im Hinblick auf einzelne oder einige oder sämtliche Führungs- und Halteelemente gedacht sein.

Beispielsweise kann angedacht sein, dass sich die Shuttles entlang einiger oder vorzugsweise entlang aller vertikal verlaufender Führungs- und Halteelemente nur in einer Richtung bewegen. Ein sich nach oben bewegendes Shuttle kann in diesem Fall nicht mit einem sich entlang desselben oder derselben vertikal verlaufenden Führungs- und Halteelemente/s nach unten bewegenden Shuttle kollidieren. In einem solchen Ausführungsbeispiel steht vorzugsweise eine Mehrzahl von vertikal verlaufenden Führungs- und Halteelementen für vertikale Bewegungen der Shuttles nach unten zum Boden der Gasse hin zur Verfügung, während eine weitere Mehrzahl von vertikal verlaufenden Führungs- und Halteelementen für vertikale Bewegungen der Shuttles nach oben zur Verfügung steht.

Alternativ oder zusätzlich kann angedacht sein, dass sich die Shuttles entlang einiger oder vorzugsweise entlang aller horizontal verlaufender Führungs- und Halteelemente nur in einer Richtung bewegen. So können horizontal verlaufender Führungs- und Halteelemente auf einer bestimmten Höhe für Fahrten der Shuttles zum einen Ende der Gasse genutzt werden, während Führungs- und Halteelemente auf einer anderen Höhe für Fahrten der Shuttles zum anderen Ende der Gasse genutzt werden.

Bereits einige nur in einer Richtung durch die Shuttles befahrene Führungs- und Halteelemente, die somit als Einbahnstrasse genutzt werden, können eine Lagersteuerung deutlich vereinfachen und die Gefahr von Fehlern und Blockade-Situationen, die beispielsweise bei Ausweichmanövern entstehen, und insbesondere von Kollisionen, deutlich verringern.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 zwei Regale 2 mit einer dazwischen befindlichen Gasse 4, welche geeignet sind, mit Führungs- und Halteelementen 6 gemäss einer Variante der vorliegenden Erfindung ausgestattet zu werden, sowie in
Figur 2 eine schematisch dargestellte Ausführungsvariante der vorliegenden Erfindung.

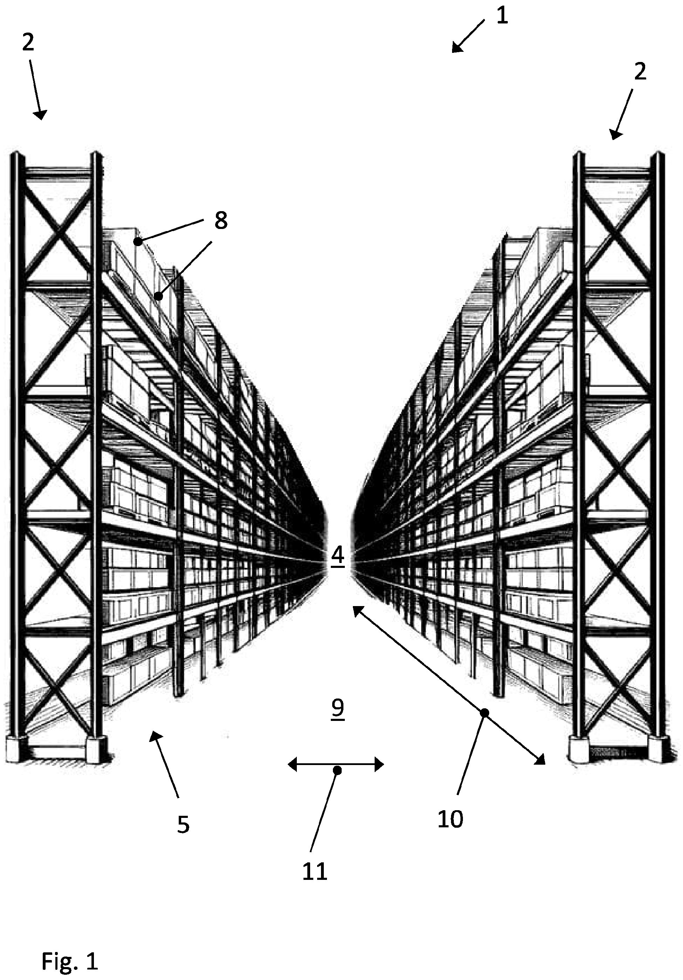

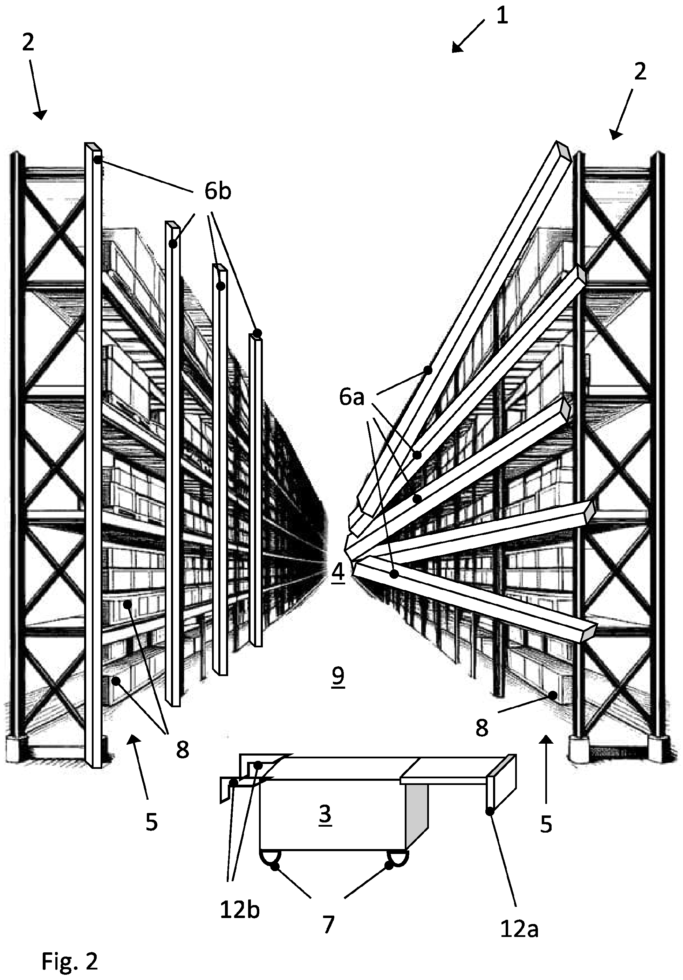

Die Figur 1 stellt ein aus dem Stand der Technik bekanntes System dar, welches in Figur 2 gemäss einer Variante der vorliegenden Erfindung umgestaltet wurde. Der besseren Übersicht halber sind nicht sämtliche identischen Merkmale und Einzelheiten mit Bezugsziffern versehen. Merkmale und Bezugsziffern, die mit Hinblick auf Figur 1 erläutert wurden, gelten gleichermassen auch für die in Figur 2 gezeigte Ausführungsform der Erfindung.

Die Figuren sind schematisch und insbesondere nicht massstabsgetreu.

### Ausführungsbeispiel

In Figur 1 ist ein Regalsystem 1 umfassend zwei Regale 2 mit einer dazwischen befindlichen Gasse 4 dargestellt. Zur Gasse 4 hin weist jedes Regal 2 eine Regalfront 5 auf. In den Regalen 2 sind Ladegüter 8 auf Lagerplätzen eingelagert, wobei nur einige wenige dieser Ladegüter 8 mit Bezugsziffern versehen sind. Die Ladegüter 8 sind über die Regalfronten 5 zugänglich, können also über die Regalfronten 5 ein- und ausgelagert werden.

Ein Boden 9 der Gasse 4 ist angedeutet, ebenso wie eine Länge 10 der Gasse 4. Diese Länge 10 der Gasse 4 definiert die Längsrichtung. Eine Breite 11 der Gasse 4 ist ebenfalls angedeutet.

In Figur 2 ist zusätzlich ein Shuttle 3 dargestellt. Das Shuttle 3 umfasst Räder 7, von denen darstellungsbedingt nur zwei zu sehen sind. Ferner umfasst das Shuttle 3 zwei Einrichtungen 12a, 12b zum Eingehen einer Wirkverbindung.

An den Regalfronten 5 sind horizontal verlaufende Führungs- und Halteelemente 6a einer ersten Gruppe von Führungs- und Halteelementen 6 sowie vertikal verlaufende Führungs- und Halteelemente 6b einer zweiten Gruppe von Führungs- und Halteelementen 6 schematisch dargestellt.

Die horizontal verlaufenden Führungs- und Halteelementen 6a der ersten Gruppe sind vertikal voneinander beabstandet und decken im Wesentlichen die gesamte Höhe der rechts in Figur 2 gezeigten Regalfront 5 ab.

Die an der gegenüberliegenden Regalfront 5 (links in Figur 2 dargestellt) befindlichen vertikal verlaufenden Führungs- und Halteelemente 6b der zweiten Gruppe sind horizontal voneinander beabstandet. Sie decken somit im Wesentlichen die gesamte Länge 10 der links in Figur 2 dargestellten Regalfront 5 ab. Lediglich der Einfachheit halber sind in Figur 2 nur vier dieser vertikal verlaufenden Führungs- und Halteelemente 6b dargestellt.

Innerhalb der in Figur 2 gezeigten Gasse 4 sind an jeder der beiden diese Gasse 4 bildenden Regalfronten 5 nur jeweils Führungs- und Halteelemente 6 einer Gruppe angeordnet. Auf der rechts in Figur 2 dargestellten Regalfront 5 sind nur horizontal verlaufende Führungs- und Halteelemente 6a angeordnet, auf der links in Figur 2 dargestellten Regalfront 5 sind nur vertikal verlaufende Führungs- und Halteelemente 6b angeordnet.

### Bezugnehmend auf die Figuren erklärt sich die Funktionsweise des erfindungsgemässen Shuttle-Systems sowie das erfindungsgemässe Verfahren folgendermassen:

Das Shuttle 3 bewegt sich autonom (in der nachstehend noch näher beschriebenen Weise) innerhalb der Gassen 4 sowie mit Hilfe der Räder 7 ausserhalb der Gassen 4, also beispielsweise in einer (nicht dargestellten) Lagervorzone oder dergleichen.

Der Einfachheit halber sind in Figur 2 nur ein Shuttle 3, zwei Regale 2 und eine dazwischen befindliche Gasse 4 dargestellt. Vorzugsweise umfasst das erfindungsgemässe Shuttle-System 1 jedoch eine Mehrzahl von Shuttles 3, Regalen 2 und Gassen 4.

Um ein Ladegut 8 ein- oder auszulagern, fährt das Shuttle 3 auf dem Boden 9 in die Gasse 4 ein. Abhängig von etwaigen bereits in dieser Gasse 4 befindlichen Shuttles 3 und/oder von weiteren Shuttles 3, deren Einfahrt in dieselbe Gasse 4 geplant ist, fährt das Shuttle 3 ein Stück weit in die Gasse 4 hinein. Dort bleibt es nach dem Einfahren stehen oder fährt zumindest ein Stück weit auf dem Boden 9 entlang der Längsrichtung 10 tiefer in die Gasse 4 hinein. In beiden Fällen bleibt das Shuttle 3 an einer Position entlang der Längsrichtung 10 stehen und ergreift mit den links in Figur 2 dargestellten Einrichtungen 12b zum Eingehen einer Wirkverbindung eine oder zwei der vertikal verlaufenden Führungs- und Halteelemente 6b, die sich an der links in Figur 2 dargestellten Regalfront 5 befinden. Anschliessend bewegt sich das Shuttle 3 entlang zumindest einem dieser Führungs- und Halteelemente 6b vertikal nach oben. Nach Erreichen seiner Ziel-Höhe hält das Shuttle 3 an. Liegt sein Ziel-Ort (zum Ein- oder Auslagern eines Ladeguts 8) bereits unmittelbar vor ihm, so führt das Shuttle 3 die zum Ein- oder Auslagern nötigen Schritte aus. Andernfalls bewegt es sich horizontal auf seiner Ziel-Höhe entlang der Längsrichtung 10 bis zum Ziel-Ort. Um sich derart in Längsrichtung 10 zu bewegen, erfolgt ein Umgreifen. Hierzu nimmt die rechts in Figur 2 dargestellte Einrichtung 12a zum Eingehen einer Wirkverbindung Kontakt zu einem oder mehreren horizontal verlaufenden Führungs- und Halteelementen 6a auf, die an der rechts in Figur 2 gezeigten Regalfront 5 angeordnet sind. Anschliessend löst das Shuttle 3 die bislang bestehende Wirkverbindung zwischen der Einrichtung zum Eingehen einer Wirkverbindung 12b und dem zumindest einen vertikal verlaufenden Führungs- und Halteelement 6b. Sodann bewegt sich das Shuttle 3 entlang des soeben ergriffenen horizontal sich erstreckenden Führungs- und Halteelements 6a in horizontaler Richtung auf seiner Ziel-Höhe zur Ziel-Position. Dort kann ein Ein- oder Auslagern erfolgen.

### Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen. Insbesondere kann an folgende Modifikationen gedacht sein:

Die Einrichtungen zum Eingehen einer Wirkverbindung 12a, 12b und die Führungs- und Halteelemente 6a, 6b sind in Figur 2 sind nur schematisch angedeutet. Hier kann an beliebige Einrichtungen und Elemente gedacht sein.

Es kann angedacht sein, dass das Shuttle 3 innerhalb der Gasse 4 mehrfach umgreift, um nach dem Einfahren in die Gasse 4 seien Ziel-Ort zu erreichen, oder um ausgehend von seinem Ziel-Ort innerhalb der Gasse 4 letztere wieder zu verlassen.

Das Shuttle 3 umfasst vorzugsweise zumindest zwei Einrichtungen 12a, 12b zum Eingehen einer Wirkverbindung. Das in Figur 2 dargestellte Shuttle 3 umfasst auf seiner linken Seite eine solche Einrichtung 12b in Form zweier Haken-ähnlicher Elemente. Auf seiner rechten Seite umfasst es eine solche Einrichtung 12a in der Art eines Greifers.

Ausgehend von der in Figur 2 dargestellten Ausführungsform umfasst das Shuttle 3 vorzugsweise im Allgemeinen auf der linken Seite eine einzelne oder aus mehreren Einrichtungen oder Elementen bestehende Einrichtung 12b zum Eingehen einer Wirkverbindung mit den vertikal verlaufenden Führungs- und Halteelementen 6b und auf der rechten Seite eine einzelne oder aus mehreren Einrichtungen oder Elementen bestehende Einrichtung 12a zum Eingehen einer Wirkverbindung mit den horizontal verlaufenden Führungs- und Halteelementen 6a. Natürlich könnte auch daran gedacht sein, die vertikal verlaufenden Führungs- und Halteelemente 6b rechts, und die horizontal verlaufenden Führungs- und Halteelemente 6a links anzuordnen. Entsprechend könnte sich das Shuttle 3 dann zum Ergreifen der passenden Führungs- und Halteelemente 6 um 180° drehen, oder die Einrichtungen zum Eingehen einer Wirkverbindung 12 könnten am Shuttle 3 dann ebenfalls seitenverkehrt angeordnet sein.

Im Allgemeinen kann daran gedacht sein, dass das Shuttle 3 ein oder mehrere Einrichtungen 12b zum Eingehen einer Wirkverbindung mit einem oder mehreren vertikal verlaufenden Führungs- und Halteelementen 6b aufweist. Ein einzelnes oder mehrere solcher Führungs- und Halteelemente 6b können also von einem einzelnen oder mehreren Einrichtungen 12b zum Eingehen einer Wirkverbindung ergriffen oder kontaktiert werden. Analoges gilt für die Einrichtungen 12a zum Eingehen einer Wirkverbindung mit einem oder mehreren horizontal verlaufenden Führungs- und Halteelementen 6a.

Sind an den Regalfronten 5 beispielsweise horizontal verlaufende Führungselemente 6a und davon separate horizontal verlaufende Halteelemente 6a angeordnet, so ergreift das Shuttle 3 vorzugsweise sowohl ein Führungs- als auch ein Halteelement 6a mit jeweils einer entsprechenden Einrichtung 12a zum Eingehen einer Wirkverbindung. Analoges gilt für separat ausgebildete vertikal verlaufende Führungselemente 6b und Halteelemente 6b.

Auch in einer von Figur 2 abweichenden Ausführungsform, bei der beispielsweise auf der links gezeigten Regalfront 5 einzelne horizontal verlaufende Führungs- und Halteelemente 6a zusätzlich zu den vertikal verlaufenden Führungs- und Halteelementen 6b vorhanden sind, so kreuzen sich diese an derselben Regalfront 5 angeordneten Führungs- und Halteelemente 6 beider Gruppen vorzugsweise nicht. Beispielsweise könnten die vertikal verlaufenden Führungs- und Halteelemente 6b auf der linken Seite in Figur 2 kürzer ausgeführt sein, und oberhalb dieser Führungs- und Halteelemente 6b könnte ein horizontal verlaufendes Führungs- und Halteelement 6a angeordnet sein.

Indem auf Kreuzungen verzichtet wird, müssen die Shuttles 3 einen Wechsel ihrer Bewegungsrichtung nicht mit Hilfe störungsanfälliger Kreuzungen bewerkstelligen. Anstatt Kreuzungen für einen Wechsel der Bewegungsrichtung vorzusehen, ist gemäss der vorliegenden Erfindung vorzugsweise an ein bereits beschriebenes Umgreifen gedacht.

Vorzugsweise ist die Breite 11 der Gasse 4 so gewählt, dass nur genau ein Shuttle 3 in die Gasse 4 einfahren kann. Die Breite 11 der Gasse 4 ist also vorzugsweise etwas grösser, als die Breite eines Shuttles 3, aber kleiner als die Breite zweier nebeneinander stehender Shuttles 3. Dieses Verhältnis geht aus den (nicht massstabsgetreuen) Figuren nicht hervor. Insgesamt kann bei allen Ausführungsvarianten der Erfindung daran gedacht sein, derart schmale Gassen 4 einzusetzen, um die Lagerdichte zu erhöhen. Da die Shuttles 3 in den Gassen 4 auf verschiedenen Höhen entlang der horizontal verlaufenden Führungs- und Halteelemente 6a verkehren können, sind auch bei derart schmalen Gassen 4 keine längeren Wartezeiten zu befürchten.

Vorzugsweise umfasst das Shuttle-System 1 ein Lagerverwaltungssystem, das in Figur 2 nicht dargestellt ist.

Die Shuttles 3 können Sensoren umfassen, die eine autonome Bewegung ermöglichen oder unterstützen können. Derartige Sensoren sind in Figur 2 nicht dargestellt.

### Bezugszeichenliste

| | |
|---|---|
| 1 | Regalsystem |
| 2 | Regal |
| 3 | Shuttle |
| 4 | Gasse |
| 5 | Regalfront |
| 6 | Führungs- und Halteelement |
| 7 | Rad |
| 8 | Ladegut |
| 9 | Boden |
| 10 | Länge / Längsrichtung der Gasse |
| 11 | Breite der Gasse |
| 12 | Einrichtung zum Eingehen einer Wirkverbindung |

## Patentansprüche

1. Shuttle-System umfassend ein Regalsystem (1) sowie zumindest ein Shuttle (3),
das Regalsystem (1) umfassend eine Mehrzahl von Regalen (2) mit dazwischen befindlichen Gassen (4), welche durch zwei einander zugewandte Regalfronten (5) gebildet werden,
wobei pro Gasse (4) jeweils eine erste der beiden diese Gasse (4) bildenden Regalfronten (5) mit einer Mehrzahl von Führungs- und Halteelementen (6a) einer ersten Gruppe ausgestattet ist, wobei diese Führungs- und Halteelemente (6a) der ersten Gruppe horizontal verlaufen,
und wobei die zweite der beiden Regalfronten (5) mit einer Mehrzahl von Führungs- und Halteelementen (6b) einer zweiten Gruppe ausgestattet ist, wobei diese Führungs- und Halteelemente (6b) der zweiten Gruppe vertikal verlaufen,
wobei das Shuttle (3) eingerichtet ist, eine Wirkverbindung zu zumindest einem Führungs- und Halteelement einzugehen (6), um an diesem zumindest einen Führungs- und Halteelement (6) gehalten zu werden und sich entlang dieses zumindest einen Führungs- und Halteelements (6) zu bewegen,
wobei das Shuttle (3) eingerichtet ist, sich innerhalb der Gasse (4) vertikal entlang der vertikal verlaufenden Führungs- und Halteelemente (6b) zu bewegen, ohne hierbei Kontakt zu den horizontal verlaufenden Führungs- und Halteelementen (6a) zu haben, und wobei das Shuttle (3) ferner eingerichtet ist, sich innerhalb der Gasse (4) horizontal entlang der horizontal verlaufenden Führungs- und Halteelemente (6a) zu bewegen, ohne hierbei Kontakt zu den vertikal verlaufenden Führungs- und Halteelementen (6b) zu haben,
und wobei das Shuttle (3) ferner eingerichtet ist, für einen Wechsel der Bewegungsrichtung eine Wirkverbindung zu den Führungs- und Halteelementen (6) einer Gruppe einzugehen und eine bis dahin bestehende Wirkverbindung zu den Führungs- und Halteelementen (6) der anderen Gruppe zu lösen.

2. Shuttle-System nach Anspruch 1, wobei die Führungs- und Halteelemente beider Gruppen (6a, 6b) sich nicht kreuzen.

3. Shuttle-System nach Anspruch 1 oder 2, wobei pro Gasse (4) jeweils die erste der beiden diese Gasse (4) bildenden Regalfronten (5) ausschliesslich mit einer Mehrzahl von horizontal verlaufenden Führungs- und Halteelementen (6a) für das Shuttle (3) ausgestattet ist, und wobei die zweite der beiden Regalfronten (5) ausschliesslich mit einer Mehrzahl von vertikal verlaufenden Führungs- und Halteelementen (6b) für das Shuttle (3) ausgestattet ist.

4. Shuttle-System nach zumindest einem der vorangehenden Ansprüche, **dadurch gekennzeichnet, dass** das zumindest eine Shuttle (3) über eine Mehrzahl von Rädern (7) zum Fahren auf ebenem Grund umfasst.

5. Shuttle-System nach zumindest einem der vorangehenden Ansprüche, **dadurch gekennzeichnet, dass** das Shuttle (3) zumindest zwei Einrichtungen (12a, 12b) zum Eingehen einer Wirkverbindung umfasst.

6. Shuttle-System nach zumindest einem der vorangehenden Ansprüche, **dadurch gekennzeichnet, dass** die Breite der Gasse (4) geringer ist, als die Breite zweier nebeneinanderstehender Shuttles (3), wobei die Breite der Gasse (4) ferner zumindest der Breite eines Shuttles (3) entspricht.

7. Shuttle-System nach zumindest einem der vorangehenden Ansprüche, **dadurch gekennzeichnet, dass** das Shuttle (3) sich mit Hilfe eines Lagerverwaltungssystems und/oder mit Hilfe von Sensoren autonom innerhalb und ausserhalb der Gassen (4) bewegt.

8. Shuttle-System nach zumindest einem der vorangehenden Ansprüche, **dadurch gekennzeichnet, dass** die Führungs- und Halteelemente (6) starr sind.

9. Shuttle-System nach zumindest einem der vorangehenden Ansprüche, **dadurch gekennzeichnet, dass** das Shuttle (3) einen Antrieb und / oder einen Energiespeicher aufweist.

10. Verfahren zum Betreiben eines Shuttle-Systems gemäss zumindest einem der vorangehenden Ansprüche,
wobei ein Einlagern von Ladegütern (8) in ein Regal, ein Auslagern von Ladegütern (8) aus einem Regal und ein Transport von Ladegütern (8) in und aus den Gassen (4) von dem zumindest einen Shuttle (3) bewerkstelligt wird.

11. Verfahren zum Betreiben eines Shuttle-Systems nach Anspruch 10, wobei
wobei das Shuttle (3) eine Wirkverbindung zu zumindest einem Führungs- und Halteelement (6) eingeht, um an diesem zumindest einen Führungs- und Halteelement (6) gehalten zu werden,
und wobei sich das Shuttle (3) entlang dieses zumindest einen Führungs- und Halteelements (6) bewegt,
wobei sich das Shuttle (3) innerhalb der Gasse (4) vertikal entlang der vertikal verlaufenden Führungs- und Halteelemente (6b) bewegt, ohne hierbei Kontakt zu den horizontal verlaufenden Führungs- und Halteelementen (6a) zu haben, und wobei sich das Shuttle (3) innerhalb der Gasse (4) horizontal entlang der horizontal verlaufenden Führungs- und Halteelemente (6a) bewegt, ohne hierbei Kontakt zu den vertikal verlaufenden Führungs- und Halteelementen (6b) zu haben,
und wobei das Shuttle (3) zwecks Wechsel der Bewegungsrichtung eine Wirkverbindung zu den Führungs- und Halteelementen (6) einer Gruppe eingeht und eine bis dahin bestehende Wirkverbindung zu den Führungs- und Halteelementen (6) der anderen Gruppe löst.

12. Verfahren nach einem der Ansprüche 10 oder 11, wobei mehrere Shuttles (3) in derselben Gasse (4) verkehren, und für eine horizontale Bewegung innerhalb dieser Gasse (4) die erste Gruppe der horizontal verlaufenden Führungs- und Halteelemente (6a), und vorzugsweise zusätzlich einen Boden (9) nutzen.

13. Verfahren nach Anspruch 12, das Verfahren umfassend folgende Schritte:
- Ein Zutrittswunsch einer Bedienperson betreffend die Gasse (4) wird erfasst
- Alle in der Gasse (4) befindlichen Shuttles (3) verlassen die Gasse (4) oder wechseln in eine gegen Abstürzen gesicherte Betriebslage.

14. Verfahren nach einem der Ansprüche 12 oder 13, **dadurch gekennzeichnet, dass** sich die Shuttles (3) entlang einer Mehrzahl der Führungs- und Halteelemente (6) nur in einer Richtung bewegen.
